(19) Europäisches Patentamt

European Patent Office

Office européen des brevets

(11) **EP 0 958 509 B1**

(12) **FASCICULE DE BREVET EUROPEEN**

(45) Date de publication et mention
de la délivrance du brevet:
**04.01.2006 Bulletin 2006/01**

(21) Numéro de dépôt: **98906987.7**

(22) Date de dépôt: **06.02.1998**

(51) Int Cl.:
***G01V 1/20*** *(2006.01)*    ***G01V 1/00*** *(2006.01)*

(86) Numéro de dépôt international:
**PCT/FR1998/000223**

(87) Numéro de publication internationale:
**WO 1998/035244 (13.08.1998 Gazette 1998/32)**

(54) **DISPOSITIF D'ACQUISITION SISMIQUE**

VORRICHTUNG ZUR SAMMLUNG SEISMISCHER DATEN

DEVICE FOR SEISMIC ACQUISITION

(84) Etats contractants désignés:
**FR GB**

(30) Priorité: **07.02.1997 FR 9701427**

(43) Date de publication de la demande:
**24.11.1999 Bulletin 1999/47**

(73) Titulaire: **Sercel**
**44470 Carquefou (FR)**

(72) Inventeurs:
 • **GAROTTA, Robert**
  **F-83590 Gonfaron (FR)**
 • **BURGER, Patrick**
  **F-44100 Nantes (FR)**

(74) Mandataire: **Martin, Jean-Jacques**
 **Cabinet Régimbeau**
 **20, rue de Chazelles**
 **75847 Paris Cedex 17 (FR)**

(56) Documents cités:
 **FR-A- 1 465 789**     **GB-A- 2 082 771**
 **US-A- 3 881 166**     **US-A- 5 189 644**
 **US-A- 5 392 213**     **US-A- 5 402 391**
 **US-A- 5 550 787**

**Description**

La présente invention est relative aux dispositifs d'acquisition sismique.

Dans la pratique conventionnelle, on utilise pour réaliser une acquisition sismique un ou plusieurs détecteurs, chacun constitué d'un groupe de capteurs élémentaires (géophones) répartis au sol et reliés entre eux de façon à fournir la sortie analogique du détecteur auquel ils appartiennent.

Les signaux analogiques en sortie de ces différents détecteurs sont des traces sismiques qui sont généralement numérisées, avant d'être enregistrées pour être traitées ultérieurement.

Usuellement, la longueur d'un détecteur est choisie de façon à réaliser un compromis entre l'élimination des grandes longueurs d'onde du bruit sismique et la préservation des hautes fréquences du signal.

On sait en effet qu'il est possible de supprimer les bruits de surface en utilisant des groupes de capteurs d'une longueur supérieure à la plus grande longueur d'onde de bruit attendue, mais que ce faisant, on atténue les fréquences hautes du signal réfléchi que l'on cherche à enregistrer.

Pour éviter un tel compromis, il a été proposé par GB- 1.391.829 un dispositif d'acquisition sismique dans lequel les capteurs d'un même groupe sont sous-divisés en plusieurs sous-groupes correspondant chacun à une bande de fréquences spatiales, les signaux analogiques en sortie de ces différents sous-groupes étant filtrés temporellement, puis recombinés pour fournir la trace sismique correspondant au groupe de capteurs.

On réalise ainsi en amont de l'enregistrement un filtrage spatio-temporel en éventail qui permet une acquisition de traces sismiques délivrées des grandes longueurs d'onde de bruit sismique, mais respectant les hautes fréquences spatiales du signal reçu sur les capteurs élémentaires.

Dans une variante plus récente de cette technique, exposée dans US - 4.499.565, il a été proposé d'utiliser pour les différents sous-groupes des capteurs de fréquences naturelles différentes, de sorte que la combinaison des capteurs réalise alors directement à la fois le filtrage spatial et le filtrage fréquentiel.

Toutefois, même avec un tel filtrage spatio-temporel préalable, les traces sismiques enregistrées en sortie de ces dispositifs ne sont pas d'une qualité satisfaisante.

Le but principal de l'invention est d'améliorer la qualité des traces sismiques qui sont enregistrées.

On connaît déjà par US 5 550 787 un dispositif d'acquisition sismique dans lequel les signaux en sortie des détecteurs sont acquis au moyen d'une chaîne d'acquisition qui comporte notamment un filtre passe-bas, un pré-amplificateur et un filtre passe-haut, puis sont traités en vue de leur stockage.

L'invention concerne quant à elle un dispositif d'acquisition sismique comportant une pluralité de détecteurs constitués d'un ou plusieurs capteurs sismiques, des moyens de filtrage spatio-temporel qui génèrent au moins une trace sismique correspondant à un groupe de détecteurs par combinaison des signaux en sortie de ceux-ci, ainsi que des moyens pour la mémorisation des traces sismiques ainsi générées, caractérisé en ce qu'il comporte des moyens de pré-traitement sismique pour le rephasage des signaux en sortie des détecteurs et/ou le filtrage spatio-temporel de ces signaux préalablement à leur sommation.

Avantageusement, les moyens de pré-traitement comportent également des moyens pour déterminer au moins un paramètre représentatif de la qualité des signaux relevés par les détecteurs.

De préférence, les moyens de pré-traitement sont de type numérique.

Egalement, au moins un détecteur appartient à deux groupes différents, les moyens de pré-traitement utilisant le signal en sortie de ce détecteur pour générer les traces sismiques correspondant à l'un et l'autre de ces deux groupes.

On notera en effet que les montages utilisées dans l'un et l'autre des dispositifs d'acquisition décrits dans GB 1 391 829 et US 4 499 565 sont compliqués et onéreux et nécessitent un grand nombre de capteurs élémentaires. Ils sont par conséquent difficiles à mettre en oeuvre.

Des moyens de pré-traitement de type numérique permettent une grande simplicité de mise en oeuvre. Ils permettent également d'utiliser un même détecteur dans plusieurs groupes et par conséquent de réduire de façon importante le nombre de détecteurs et donc le coût du dispositif d'acquisition.

Par ailleurs, dans les techniques proposées dans GB 1 391 829 et US 4 499 565, les filtrages réalisés restent imprécis et ne sont qu'une simple approximation en escalier d'un filtrage idéal correspondant à une vitesse apparente constante. Egalement, ces filtrages présentent l'inconvénient d'être figés par construction et de ne pas pouvoir être aisément modifiés en cours d'acquisition.

Un autre but de l'invention est donc de proposer un dispositif d'acquisition qui permet un filtrage spatio-temporel de plus grande qualité que ceux que permettent les dispositifs décrits dans GB 1.391.829 et US 4.499.565, ainsi qu'une plus grande souplesse de traitement.

A cet effet, les moyens de pré-traitement réalisent un filtrage spatio-temporel de type en éventail progressif sur les signaux en sortie des détecteurs.

Par filtrage progressif, on entend un filtrage qui correspond, en représentation dans le domaine spatio-fréquentiel à des courbes de niveau d'atténuation qui sont continues.

On notera que l'utilisation de moyens de pré-traitement numérique pour la combinaison des signaux en sortie des détecteurs et la formation des traces sismiques permet de réaliser un tel filtrage progressif et donc un filtrage coïncidant avec le filtrage idéalement souhaité.

D'autres caractéristiques et avantages de l'invention ressortiront encore de la description qui suit. Cette description est purement illustrative et non limitative. Elle doit être lue en regard des dessins annexés sur lesquels :

- la figure 1 représente schématiquement un dispositif d'acquisition sismique conforme à un mode de réalisation possible de l'invention ;
- la figure 2 est un organigramme sur lequel on a porté différentes étapes de pré-traitement possibles pour le dispositif de la figure 1 ;
- la figure 3a illustre l'allure d'une combinaison de signaux sismiques non rephasés ;
- la figure 3b illustre l'allure d'une combinaison de signaux sismiques rephasés ;
- les figures 4a et 4b illustrent le traitement de suppression de bruit accidentel mis en oeuvre par l'invention ;
- la figure 5a est un graphe sur lequel on a porté en fonction du nombre d'onde les réponses en amplitude des différentes combinaisons de sous-groupes de détecteurs que réalisent les moyens de pré-traitement du dispositif de la figure 1 ;
- la figure 5b est un graphe sur lequel on a porté les différents filtres fréquentiels appliqués aux combinaisons correspondant aux réponses de la figure 5a ;
- la figure 5c est un graphe sur lequel on a porté dans le domaine spectral différentes courbes de niveau d'atténuation du filtrage spatio-temporel obtenu en combinant les réponses des figures 5a et 5b ;
- les figures 6a à 6c sont des relevés sismiques qui illustrent une mise en oeuvre d'un traitement de filtrage spatio-temporel du type de celui illustré sur les figures 5a à 5c.

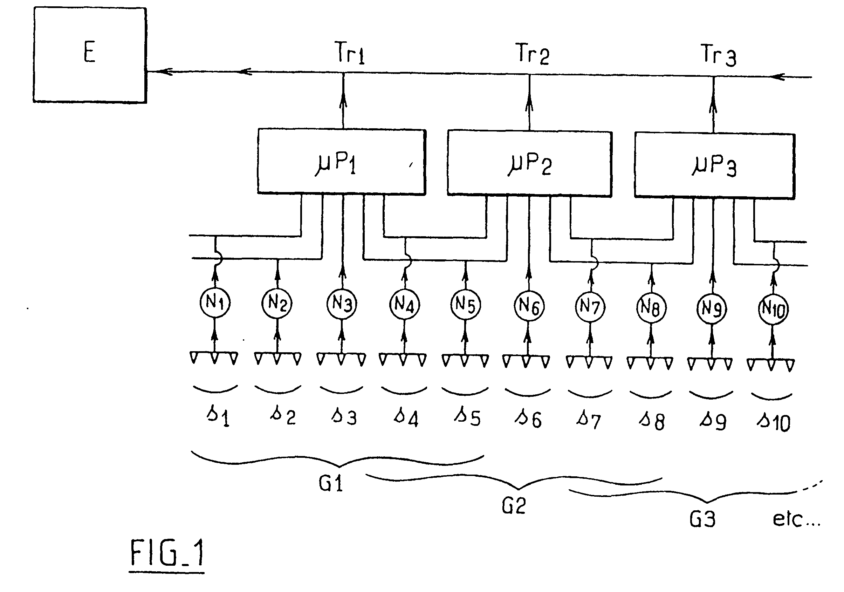

Le dispositif d'acquisition qui est représenté sur la figure 1 comporte une pluralité de détecteurs s1, s2, ...sn constitués chacun d'un ou plusieurs capteurs sismiques élémentaires (géophones monocomposantes ou encore triphones).

Ces différents capteurs élémentaires sont par exemple répartis linéairement sur le terrain, la distance entre deux capteurs successifs étant constante sur toute la longueur où ils sont répartis.

Le signal analogique en sortie de chaque détecteur s1, s2, ...sn est envoyé sur un numériseur N1, N2, ... Nn, puis, après numérisation sur plusieurs unités de traitement $\mu$P1, $\mu$P2, ....

Plus particulièrement, chaque unité de traitement reçoit les signaux numérisés en provenance d'un groupe de détecteurs. Elle traite ces différents signaux pour générer une trace sismique qui correspond audit groupe de détecteurs en combinant ces signaux.

Sur la figure 1, les traces sismiques en sortie des microprocesseurs $\mu$P1, $\mu$P2, ... etc, ont été référencées par Tr1, Tr2, ... etc, et les groupes de détecteurs qui leur correspondent par G1, G2, ... etc. Les traces sismiques Tr1, Tr2, ... etc, sont envoyées, par exemple par liaison filaire ou radio-télémétrie, sur une unité d'enregistrement E où elles sont mémorisées.

On utilise certains détecteurs pour plusieurs groupes à la fois : dans l'exemple de la figure 1, les détecteurs s4 et s5 appartiennent à la fois au groupe G1 et au groupe G2 ; les détecteurs s7 et s8 appartiennent à la fois au groupe G2 et au groupe G3.

Ceci permet de réduire considérablement le nombre de capteurs élémentaires du dispositif, par exemple de le réduire de moitié dans le cas d'une acquisition 2D avec une distance entre groupes de 25 m, un diamètre de groupes de 50 m et une distance entre capteurs de l'ordre de 3m.

Comme on l'aura compris, l'architecture qui vient d'être décrite est très souple, puisqu'il est possible à tout moment de reprogrammer le ou les microprocesseurs $\mu$P1, $\mu$P2, etc. pour modifier les groupes G1, G2, etc. ou encore les traitements appliqués aux sorties des détecteurs.

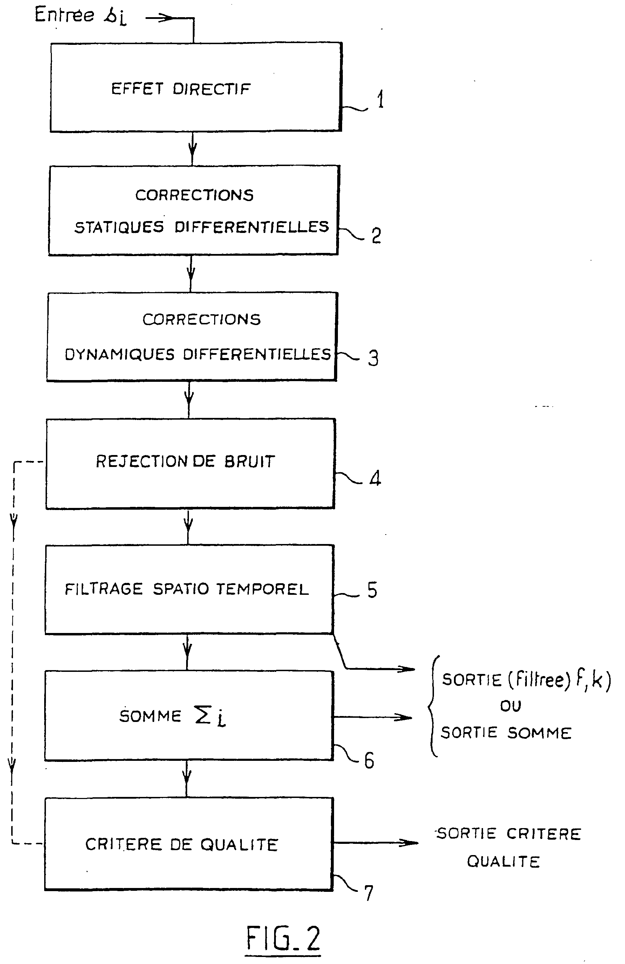

Les traitements mis en oeuvre par les microprocesseurs $\mu$P1, $\mu$P2, ... etc, sur les signaux numériques qu'ils reçoivent en provenance des détecteurs vont maintenant être décrits en référence à la figure 2.

Dans l'exemple qui correspond à l'organigramme illustré sur cette figure 2, les signaux font l'objet de sept traitements.

Trois de ces traitements (ceux des étapes 1 à 3) correspondent à des traitements de rephasage.

Plus particulièrement, dans une étape 1, on met en oeuvre un traitement pour corriger le retard que les différents signaux relevés par les détecteurs $s_i$ peuvent avoir les uns par rapport aux autres du fait du pendage de la géologie.

Dans une étape 2, on corrige les déphasages que les signaux relevés par les différents détecteurs $s_i$ peuvent avoir les uns par rapport aux autres du fait de l'altimétrie.

Dans une étape 3, on corrige le déphasage que les signaux relevés par les différents détecteurs $s_i$ peuvent avoir les uns par rapport aux autres du fait des changements d'obliquité.

Les microprocesseurs $\mu$P1, $\mu$P2, etc mettent également en oeuvre un traitement de rejection (étape 4), ainsi qu'un traitement de combinaison (filtrage spatio-temporel de l'étape 5 ou sommation de l'étape 6).

Dans un dernier traitement (étape 7) enfin, on met en oeuvre une détermination d'un ou plusieurs paramètres représentatifs de la qualité des traces sismiques mémorisées.

Comme on l'aura compris, selon la configuration dans laquelle on se trouve, on pourra préférer de ne mettre en oeuvre que certaines des étapes présentées sur l'organigramme de la figure 2.

On notera par ailleurs que la sortie de l'étape 6, si elle est activée seule, correspond à la somme conventionnelle des signaux en sortie des détecteurs. Elle peut être activée indépendamment de l'étape 5 ou avec celle-ci, auquel cas on peut disposer de deux traces différentes en sortie du traitement.

Les différentes étapes vont maintenant être décrites de façon détaillée.

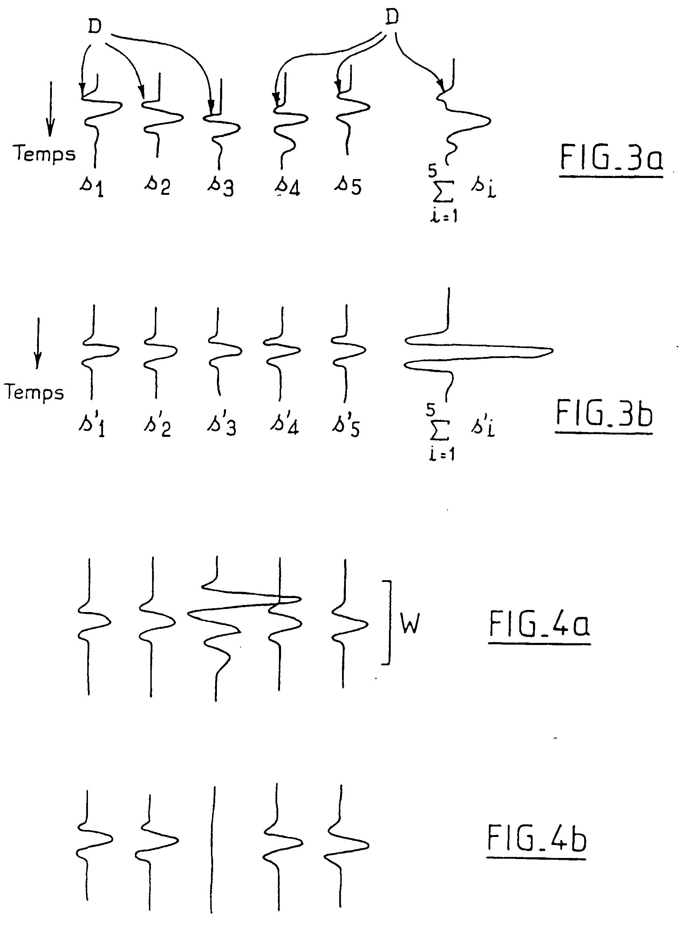

L'effet des traitements de rephasage des étapes 1 à 3 est illustré sur les figures 3a et 3b sur lesquelles on a respectivement représenté les signaux en sortie des détecteurs avant et après rephasage, ainsi que leur somme.

La correction de déphasage due au pendage (effet directif - étape 1) s'effectue en appliquant au signal relevé par chaque détecteur si un décalage temporel

$$\tau_i = p_i x g,$$

où g est le gradient temps et où $p_i$ est la distance entre le barycentre du détecteur $s_i$ et la trace sur le plan horizontal du plan de pendage passant par le barycentre de l'ensemble des détecteurs appartenant au même groupe.

Comme on l'aura compris, ce traitement suppose que l'on dispose préalablement de la connaissance de l'azimut du pendage, de la valeur du pendage (qui définissent le gradient temps selon la relation sin $\alpha$ = vg où v est la vitesse du milieu et $\alpha$ l'angle du pendage par rapport à l'horizontale) et de la géométrie des capteurs qui constituent les détecteurs.

Les corrections statiques des déphasages dus à l'altimétrie (étape 2) peuvent se déterminer de plusieurs façons. Lorsque les altimétries différentielles des détecteurs sont connues, on applique aux différents détecteurs des décalages de temps proportionnels à celles-ci.

En variante, on peut également rephaser les signaux en déterminant sur ceux-ci leurs instants de départ (D sur la figure 3a) et en recalant ces instants de départ en fonction des distances $X_i$ entre les différents détecteurs $s_i$ et la source sismique.

L'étape 3 de correction dynamique différentielle permet de corriger les déphasages dus à l'obliquité des trajets des ondes sonores, laquelle est croissante avec la distances des détecteurs à la source, $X_m$ étant la distance moyenne à la source. On applique au signal sur le détecteur $s_i$ situé à la distance $X_i$ de la source un décalage de temps positif (si $X_i > X_m$) ou négatif (si $X_i < X_m$) qui est fonction de $X_m$, de ($X_m$-$X_i$), du temps d'enregistrement et de la vitesse du recouvrement.

La formule donnant le décalage à appliquer par rapport au temps d'enregistrement (également appelé temps de réflexion) T s'écrit

$$\delta (\Delta T)_i = \frac{(X_i - X_m)}{X_m V^2 \sqrt{T^2 + X_m^2 / V^2}}$$

Bien entendu, les étapes 1 à 3 peuvent être mises en oeuvre dans un ordre différent de celui de la figure 2.

L'étape 4 de réjection de bruit permet quant à elle de supprimer les bruits accidentels sur les signaux reçus.

On a représenté sur la figure 4a l'allure des signaux en sortie de cinq détecteurs successifs, le détecteur du milieu étant affecté d'un bruit accidentel.

Pour détecter un tel bruit, on évalue pour chaque signal reçu, dans une fenêtre temporelle donnée, l'amplitude ou l'énergie de ce signal.

Par exemple, on détermine sur un signal en sortie d'un détecteur la somme $\Sigma_L |a_i|$ ou $\Sigma_L a^2_i$ où $a_i$ correspond aux valeurs d'échantillonnages du signal et L est la longueur de l'intervalle temporel dans lequel le signal est analysé.

L'intervalle d'échantillonnage est par exemple de L/2 (évaluation du signal reçu sur trois valeurs).

On peut également appliquer à ces valeurs, lorsque les distances entre la source et les détecteurs sont connues, des termes correctifs (par exemple $1/X_i$ ou $1/X^2_i$ pour le détecteur situé à une distance $X_i$ de la source) pour prendre en compte la dispersion d'amplitude ou d'énergie.

Lorsqu'une valeur ainsi obtenue dépasse un seuil donné, par exemple fonction de la valeur médiane des valeurs obtenues pour le groupe, le signal en sortie du détecteur pour lequel un bruit accidentel est ainsi détecté est rendu nul. Pour rétablir l'amplitude du résultat au niveau de la somme, on augmente les signaux en sortie des autres détecteurs dans un rapport p/p-q où p est le nombre de détecteurs d'un même groupe et où q est le nombre de détecteurs qui dépasse le seuil.

Le filtrage spatio-temporel de l'étape 5 va maintenant être décrit en référence aux figures 5a à 5c.

Les figures 5a à 5c illustrent, pour le groupe G1 défini par les détecteurs s1 à s5, un exemple de traitement possible pour l'obtention de la trace sismique correspondant audit groupe.

Après numérisation, on réalise sur les sorties des détecteurs s1 à s5 trois combinaisons, l'une par sommation des sorties des détecteurs s1 à s5, une autre par sommation des sorties des détecteurs s2 à s4, la troisième correspondant à la sortie du détecteur s3 seule.

On réalise ainsi sur le signal bruité reçu au niveau des détecteurs un filtrage spatial correspondant, en fonction du nombre d'onde - référencé par k dans la suite du texte - aux réponses a(k), b(k), c(k) illustrées sur la figure 5a.

La fonction a(k) (qui correspond à la somme de l'ensemble des sorties des détecteurs du groupe G1) atténue les grandes longueur d'onde ; la fonction b(k) (somme des sorties des détecteurs médians s2, s3 et s4) correspond à un filtrage intermédiaire ; la fonction c(k) (s3 seul) correspond à un filtrage spatial minimum qui respecte les hautes fréquences spatiales (nombres d'ondes) du signal attendu.

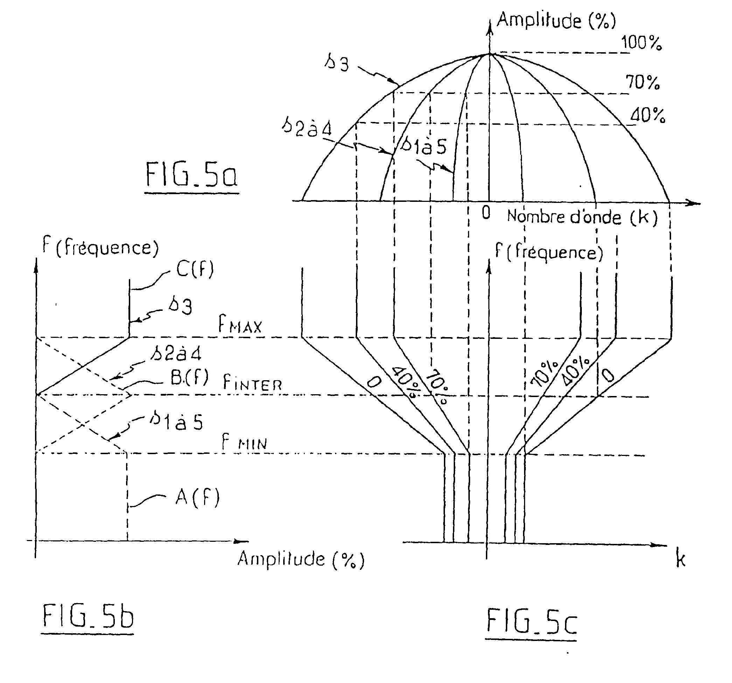

A chaque combinaison des sorties des détecteurs s1 à s5, on applique également un filtrage fréquentiel - avant ou après sommation des sorties des détecteurs - ce filtrage fréquentiel correspondant par exemple aux trois fonctions A(f), B(f) et C(f) telles que représentées sur la figure 5b,

Dans l'exemple illustré sur ladite figure 5b :

- le filtrage fréquentiel A(f), qui est appliqué à la première combinaison, est tel que A(f) est nulle pour f supérieure à une valeur $f_{inter}$ donnée, décroît linéairement de 1 à 0 pour les valeurs de f comprises entre une valeur $f_{min}$ inférieure à $f_{inter}$ et est égale à 1 entre 0 et $f_{min}$ ;
- le filtrage fréquentiel B(f), qui est appliqué à la deuxième combinaison, est tel que B(f) est nulle pour f supérieure à une valeur $f_{max}$ donnée supérieure à $f_{inter}$ et pour f inférieure à la valeur $f_{min}$, en étant linéairement croissante de 0 à 1 pour les valeurs de f comprises entre $f_{min}$ et $f_{inter}$ et linéairement décroissante de 1 à 0 pour les valeurs de f comprises entre $f_{inter}$ et $f_{max}$ ;
- le filtrage fréquentiel C(f) qui est appliqué à la troisième combinaison est tel que C(f) est nulle pour les valeurs de f comprises entre 0 et $f_{inter}$, croit linéairement de 0 à 1 pour les valeurs de f comprises entre $f_{inter}$ et $f_{max}$ et est égale à 1 pour les valeurs de f supérieures à $f_{max}$.

Les valeurs $f_{min}$ et $f_{max}$ correspondent respectivement à une fréquence typique de bruit et à une fréquence supérieure au bruit. La valeur $f_{inter}$ est choisie comme étant la valeur médiane entre $f_{min}$ et $f_{max}$.

La trace sismique obtenue est la somme des combinaisons ainsi filtrées spatialement et fréquentiellement. Dans le plan f/k, le filtrage spatio-temporel résultant - qui correspond à

$$A(f)a(k) + B(f)b(k) + C(f)c(k)$$

- est un filtrage en éventail du type de celui illustré sur la figure 5c, sur laquelle on a porté les courbes d'atténuation à - 3dB et - 6 dB, ainsi que la courbe en dessous de laquelle la réponse obtenue passe par 0 et demeure faible, la réponse étant totalement dépourvue d'atténuation sur la droite k = 0.

Ainsi qu'on peut le constater sur cette figure 5c, le filtrage spatio-temporel ainsi réalisé est progressif entre $f_{min}$ et $f_{max}$ et par conséquent d'une plus grande précision que le filtrage en escalier que permettent d'obtenir les dispositifs décrits dans GB 1.391.829 et US 4.499.565.

Dans l'exemple particulier illustré en référence aux figures 5a à 5c, le filtrage réalisé coïncide avec un filtrage correspondant à une vitesse apparente constante entre $f_{min}$ et $f_{max}$, lequel filtrage est généralement considéré comme étant optimal.

De préférence, le ou les microprocesseurs $\mu$P1, $\mu$P2, etc. sont programmés de façon que les groupes de détecteurs G1, G2, etc. comportent chacun un nombre suffisant de capteurs élémentaires pour éliminer les grandes longueurs d'onde du bruit sismique, tandis que les détecteurs sg1, sg2, ..., sgn présentent un nombre de capteurs élémentaires suffisamment petit pour respecter les hautes fréquences du signal.

Dans l'étape 7, on détermine un paramètre représentatif de la qualité des signaux reçus en sortie des détecteurs $s_i$, préalablement aux combinaisons sur lesdits signaux.

Ces critères qualités peuvent se déterminer à partir des quantités calculées dans l'étape 4. Ils correspondent par exemple aux paramètres suivants :

$$C_1 = \frac{\sum_0^P \left|\Sigma_L a_i\right|}{P \sum_0^P \Sigma_L |a_i|} \, , \; C_2 = \frac{\sum_0^P \left|\Sigma_L a_i\right|^2}{P \sum_0^P \Sigma_L a_i^2} \, , \; C_3 = \frac{\sum_0^P \left|\Sigma_L a_i\right|}{\sum_0^P \Sigma_L |a_i - a_{i-1}|}$$

qui peuvent se déterminer à partir des quantités calculées dans l'étape 4.

Ces paramètres $C_1$ à $C_3$ sont croissants avec la ressemblance des signaux en sortie des détecteurs à l'intérieur d'un même groupe.

Toutefois, les critères $C_1$ et $C_2$ sont bornés à 1 (valeur correspondant à la ressemblance parfaite), alors que le critère $C_3$ est plus sensible et peut tendre théoriquement vers l'infini.

Le choix entre l'un et l'autre de ces critères dépend de la sensibilité recherchée.

On notera que le fait de disposer de critères relatifs à la qualité des signaux en sortie des détecteurs constitue un apport important puisque la qualité d'un enregistrement sismique est généralement appréciée empiriquement par les opérateurs, par une observation visuelle du relevé d'enregistrement.

D'autres paramètres de qualité sont bien entendu envisageables, par exemple les valeurs des rapports entre la somme des pics de cross-corrélation et celles des pics d'autocorrélation ou encore le rapport entre l'échantillon au temps zéro du signal et l'échantillon maximum à un temps non nul (bruit).

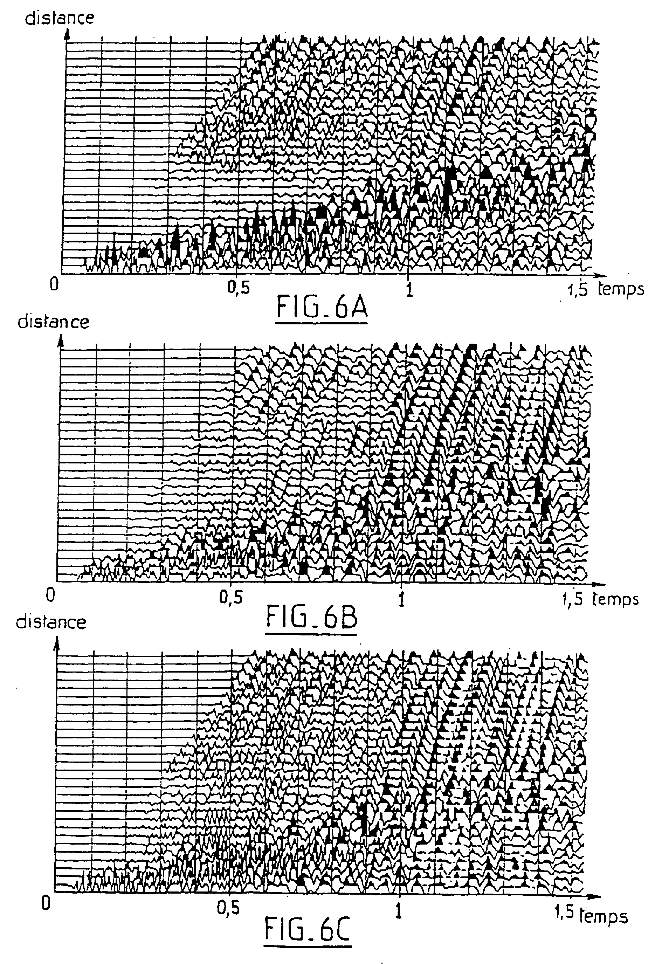

Un exemple de résultats de pré-traitement ont été illustrés sur les figures 6a à 6c.

La figure 6a représente un relevé obtenu en sortie d'un détecteur, ce relevé étant dépourvu de filtrage spatial.

La figure 6b représente un relevé obtenu en sommant de façon conventionnelle les sorties de quinze détecteurs d'un même groupe d'une longueur de 30 m.

La figure 6c représente le relevé obtenu dans les mêmes conditions en mettant en oeuvre le filtrage spatio-temporel qui vient d'être décrit en référence aux figures 5a à 5c. On constate que par rapport aux relevés des figures 6a et 6b, le relevé de la figure 6c est moins bruité et porteur de beaucoup plus d'informations.

D'autres variantes de réalisation que celle qui vient d'être décrite sont bien entendu envisageables.

En particulier, l'invention a été principalement décrite dans le cadre d'une acquisition 2D, mais peut également trouver application pour des acquisitions 3D.

Egalement, d'autres pré-traitement complémentaires que ceux qui viennent d'être décrits peuvent être envisagés, par exemple des traitements de filtrage par polarisation.

Egalement encore, l'ensemble du prétraitement peut être centralisé pour les différents groupes de détecteurs au niveau d'un seul microprocesseur ; au lieu d'un numériseur par détecteur, il peut être prévu des numériseurs à plusieurs entrées répartis sur toute la longueur d'une ligne d'acquisition.

### Revendications

1. Dispositif d'acquisition sismique comportant une pluralité de détecteurs (s1, s2, etc) constitués d'un ou plusieurs capteurs sismiques, des moyens de filtrage spatio-temporel qui génèrent au moins une trace sismique correspondant à un groupe de détecteurs par combinaison des signaux en sortie de ceux-ci, ainsi que des moyens pour la mémorisation des traces sismiques ainsi générées, **caractérisé en ce qu'**il comporte des moyens de pré-traitement sismique ($\mu$P1, $\mu$P2, etc) pour le rephasage des signaux en sortie des détecteurs et/ou le filtrage spatio-temporel de ces signaux préalablement à leur sommation.

2. Dispositif selon la revendication 1, **caractérisé en ce que** les moyens de pré-traitement ($\mu$P1, $\mu$P2, etc) comportent également des moyens pour déterminer au moins un paramètre représentatif de la qualité des signaux relevés par les détecteurs.

3. Dispositif selon les revendications 1 ou 2, **caractérisé en ce que** les moyens de pré-traitement sont de type numérique.

4. Dispositif selon l'une des revendications précédentes, **caractérisé en ce qu'**au moins un détecteur (s1, s2, etc.) appartient à deux groupes différents (G1, G2, etc.), les moyens de pré-traitement ($\mu$P1, $\mu$P2, etc.) utilisant le signal en sortie de ce détecteur pour générer les traces sismiques correspondant à l'un et l'autre de ces deux groupes.

5. Dispositif selon la revendication 3,

**caractérisé en ce que** les moyens de pré-traitement réalisent un filtrage spatio-temporel de type en éventail progressif sur les signaux en sortie des détecteurs.

**6.** Dispositif d'acquisition sismique selon la revendication 5, **caractérisé en ce que** les filtrages temporels des combinaisons sont de type progressif.

**7.** Dispositif d'acquisition sismique selon la revendication 6, **caractérisé en ce que** les moyens de pré-traitement réalisent un filtrage spatio-temporel qui correspond à une fonction de filtrage de type $A(f)a(k) + B(f)b(k) + C(f)c(k)$ où f et k sont des variables de fréquence et de nombre d'onde et où $a(k)$, $b(k)$, $c(k)$ sont des fonctions de filtrage spatial, $a(k)$ correspondant à un filtrage des grandes longueurs d'onde du bruit sismique attendu, $b(k)$ correspondant à un filtrage des longueurs d'onde intermédiaires, $c(k)$ réalisant un filtrage qui respecte le signal au delà d'un nombre d'onde donné,
$A(f)$, $B(f)$ et $C(f)$ étant des fonctions de filtrage fréquentiel correspondant aux filtrages associés aux combinaisons qui correspondent aux fonctions $a(k)$, $b(k)$, $c(k)$.

**8.** Dispositif d'acquisition sismique selon la revendication 7, **caractérisé en ce que** la fonction de filtrage fréquentiel $A(f)$, qui est appliquée à la première combinaison, est tel que $A(f)$ est nulle pour f supérieure à une valeur $f_{inter}$ donnée, décroît linéairement de 1 à 0 pour les valeurs de f comprises entre une valeur $f_{min}$ inférieure à $f_{inter}$ et est égale à 1 entre 0 et $f_{min}$,
**en ce que** la fonction de filtrage fréquentiel $B(f)$, qui est appliquée à la deuxième combinaison, est telle que $B(f)$ est nulle pour f supérieure à une valeur $f_{max}$ donnée supérieure à $f_{inter}$ et pour f inférieure à la valeur $f_{min}$, en étant linéairement croissante de 0 à 1 pour les valeurs de f comprises entre $f_{min}$ et $f_{inter}$ et linéairement décroissante de 1 à 0 pour les valeurs de f comprises entre $f_{inter}$ et $f_{max}$,
et **en ce que** la fonction de filtrage fréquentiel $C(f)$ qui est appliquée à la troisième combinaison est telle que $C(f)$ est nulle pour les valeurs de f comprises entre 0 et $f_{inter}$, croît linéairement de 0 à 1 pour les valeurs de f comprises entre $f_{inter}$ et $f_{max}$ et est égale à 1 pour les valeurs de f supérieures à $f_{max}$.

**9.** Dispositif d'acquisition sismique selon la revendication 8, **caractérisé en ce que** la valeur $f_{min}$ correspond à une fréquence typique du bruit sismique, la valeur de $f_{max}$ correspondant à une fréquence supérieure au bruit sismique.

**Patentansprüche**

**1.** Vorrichtung zur Erfassung seismischer Daten, die mehrere aus einem oder mehreren seismischen Sensoren gebildete Detektoren (s1, s2, usw.), Mittel zur Raum-Zeit-Filterung, die mindestens eine seismische Spur, die einer Gruppe von Detektoren entspricht, durch Kombination von deren Ausgangssignalen erzeugen, sowie Mittel zur Speicherung der auf diese Weise erzeugten seismischen Spuren aufweist, **dadurch gekennzeichnet, dass** sie Mittel zur seismischen Vorverarbeitung ($\mu$P1, $\mu$P2, usw.) zur Phasenkorrektur der Ausgangssignale der Detektoren und/oder der Raum-Zeit-Filterung dieser Signale vor deren Summierung umfaßt.

**2.** Vorrichtung nach Anspruch 1, **dadurch gekennzeichnet, dass** die Vorverarbeitungsmittel ($\mu$P1, $\mu$P2, usw.) auch Mittel umfassen, um mindestens einen Parameter zu bestimmen, der für die Qualität der von den Detektoren gemessenen Signale repräsentativ ist.

**3.** Vorrichtung nach den Ansprüchen 1 oder 2, **dadurch gekennzeichnet, dass** die Vorverarbeitungsmittel digitaler Art sind.

**4.** Vorrichtung nach einem der vorangehenden Ansprüche, **dadurch gekennzeichnet, dass** mindestens ein Detektor (s1, s2, usw.) zwei verschiedenen Gruppen (G1, G2, usw.) zugehörig ist, wobei die Vorverarbeitungsmittel ($\mu$P1, $\mu$P2, usw.) das Ausgangssignal dieses Detektors verwenden, um die seismischen Spuren zu erzeugen, die beiden dieser Gruppen entsprechen.

**5.** Vorrichtung nach Anspruch 3, **dadurch gekennzeichnet, dass** die Vorverarbeitungsmittel eine progressive fächerartige Raum-Zeit-Filterung der Ausgangssignale der Detektoren durchführen.

**6.** Vorrichtung zur Erfassung seismischer Daten nach Anspruch 5, **dadurch gekennzeichnet, dass** die Zeitfilterungen der Kombinationen progressiver Art sind.

**7.** Vorrichtung zur Erfassung seismischer Daten nach Anspruch 6, **dadurch gekennzeichnet, dass** die Vorverarbeitungsmittel eine Raum-Zeit-Filterung durchführen, die einer Filterfunktion vom Typ A(f)a(k) + B(f)b(k) + C(f)c(k) entspricht,
wobei f und k Frequenz- und Wellenzahl-Variablen sind und wobei a(k), b(k), c(k) Raumfilterfunktionen sind, wobei a(k) einer Filterung der großen Wellenlängen des erwarteten seismischen Rauschens entspricht, b(k) einer Filterung der mittleren Wellenlängen entspricht, c(k) eine Filterung durchführt, die das Signal jenseits einer gegebenen Wellenzahl berücksichtigt, und
A(f), B(f) und C(f) Frequenzfilterfunktionen sind, die den Filterungen entsprechen, die mit den Kombinationen verknüpft sind, die den Funktionen a(k), b(k), c(k) entsprechen.

**8.** Vorrichtung zur Erfassung seismischer Daten nach Anspruch 7, **dadurch gekennzeichnet, dass** die Frequenzfilterfunktion A(f), die auf die erste Kombination angewandt wird, derart ausgelegt ist, dass A(f) für Werte von f, die größer sind als ein gegebener Wert $f_{inter}$, gleich Null ist, für Werte von f zwischen einem Wert $f_{min}$. der kleiner ist als $f_{inter}$, linear von 1 auf 0 abfällt, und zwischen 0 und $f_{min}$ gleich 1 ist,
**dadurch**, dass die Frequenzfilterfunktion B(f), die auf die zweite Kombination angewandt wird, derart ausgelegt ist, dass für Werte von f, die größer sind als ein gegebenen Wert $f_{max}$, der größer ist als $f_{inter}$, und für Werte von f, die kleiner sind als der Wert $f_{min}$, B(f) gleich Null ist, für Werte von f zwischen $f_{min}$ und $f_{inter}$ B(f) linear von 0 auf 1 ansteigt, und für Werte von f zwischen $f_{inter}$ und $f_{max}$ B(f) linear von 1 auf 0 abfällt,
sowie **dadurch**, dass die Frequenzfilterfunktion C(f), die auf die dritte Kombination angewandt wird, derart ausgelegt ist, dass für Werte von f zwischen 0 und $f_{inter}$ C(f) gleich Null ist, für Werte von f zwischen $f_{inter}$ und $f_{max}$ C(f) linear von 0 auf 1 ansteigt, und für Werte von f, die größer sind als $f_{max}$, C(f) gleich 1 ist.

**9.** Vorrichtung zur Erfassung seismischer Daten nach Anspruch 8, **dadurch gekennzeichnet, dass** der Wert $f_{min}$ einer typischen Frequenz des seismischen Rauschens entspricht, und der Wert $f_{max}$ einer Frequenz entspricht, die über dem seismischen Rauschen liegt.

**Claims**

**1.** Seismic acquisition apparatus comprising a plurality of detectors ($s_1$, $s_2$, etc.) constituted by one or more seismic sensors, space-time filtering means which generate at least one seismic trace corresponding to a group of detectors by combining signals output therefrom, and storage means for storing the seismic traces generated in this way, the apparatus being **characterized in that** it comprises seismic preprocessor means ($\mu P_1$, $\mu P_2$, etc.) for re-phasing the signals output by the detectors and/or for space-time filtering said signals prior to the signals being summed.

**2.** Apparatus according to claim 1, **characterized in that** the preprocessor means ($\mu P_1$, $\mu P_2$, etc.) also comprise means for determining at least one parameter representative of the quality of the signals picked up by the detectors.

**3.** Apparatus according to claim 1 or 2, **characterized in that** the preprocessor means are of the digital type.

**4.** Apparatus according to any preceding claim, **characterized in that** at least one detector ($s_1$, $s_2$, etc.) belongs to two different groups ($G_1$, $G_2$, etc.), the preprocessor means ($\mu P_1$, $\mu P_2$, etc.) using the signal output by said detector to generate seismic traces corresponding to both of said groups.

**5.** Apparatus according to claim 3, **characterized in that** the preprocessor means perform space-time filtering of the progressive fan type on the signals output by the detectors.

**6.** Seismic acquisition apparatus according to claim 5, **characterized in that** the time filtering on the combinations is of the progressive type.

**7.** Seismic acquisition apparatus according to claim 6, **characterized in that** the preprocessor means perform space-time filtering corresponding to a filter function of the A(f)a(k) + B(f)b(k) + C(f)c(k) type,
in which f̲ and k̲ are frequency and wave number variables, and
in which a(k), b(k), and c(k) are space filtering functions, a(k) corresponding to filtering the long wavelengths of the expected seismic noise, b(k) corresponding to filtering intermediate wavelengths, and c(k) performing filtering that passes the signal above a given wave number;
A(f), B(f), and C(f) being frequency filter functions corresponding to filtering which is associated with the combinations that correspond to the functions a(k), b(k), and c(k).

8. Seismic acquisition apparatus according to claim 7, **characterized in that** the frequency filtering function A(f) which is applied to the first combination is such that A(f) is zero for $\underline{f}$ greater than a given value $f_{inter}$, decreases linearly from 1 to 0 for values of $\underline{f}$ lying in the range $f_{min}$ less than $f_{inter}$, and is equal to 1 in the range 0 to $f_{min}$;
**in that** the frequency filter function B(f) which is applied to the second combination is such that B(f) is zero for $\underline{f}$ greater than a given value $f_{max}$ greater than $f_{inter}$ and for $\underline{f}$ less than the value $f_{min}$, increasing linearly from 0 to 1 for values of $\underline{f}$ lying in the range $f_{min}$ to $f_{inter}$, and decreases linearly from 1 to 0 for values of $\underline{f}$ lying in the range $f_{inter}$ to $f_{max}$; and
**in that** the frequency filter function C(f) which is applied to the third combination is such that C(f) is zero for values of f lying between 0 and $f_{inter}$, increases linearly from 0 to 1 for values of $\underline{f}$ lying between $f_{inter}$ and $f_{max}$, and is equal to 1 for values of $\underline{f}$ greater than $f_{max}$.

9. Seismic acquisition apparatus according to claim 8, **characterized in that** the value $f_{min}$ corresponds to a typical frequency for seismic noise, the value of $f_{max}$ corresponding to a frequency greater than that of seismic noise.

FIG_1

Entrée $b_i$ →

┌─────────────────────────────┐
│                             │
│      EFFET DIRECTIF         │  ⌐ 1
│                             │
└─────────────────────────────┘
              │
              ▼
┌─────────────────────────────┐
│      CORRECTIONS            │
│  STATIQUES DIFFERENTIELLES  │  ⌐ 2
│                             │
└─────────────────────────────┘
              │
              ▼
┌─────────────────────────────┐
│      CORRECTIONS            │
│ DYNAMIQUES DIFFERENTIELLES  │  ⌐ 3
│                             │
└─────────────────────────────┘
              │
              ▼
┌─────────────────────────────┐
│    REJECTION DE BRUIT       │  ⌐ 4
│                             │
└─────────────────────────────┘
              │
              ▼
┌─────────────────────────────┐
│  FILTRAGE SPATIO TEMPOREL   │  ⌐ 5
│                             │
└─────────────────────────────┘
              │
              ▼                    ⎧ SORTIE (Filtree) $f, k$
┌─────────────────────────────┐    ⎪            OU
│      SOMME $\sum_i$         │ →  ⎨
│                             │    ⎪  SORTIE SOMME
└─────────────────────────────┘ ⌐ 6 ⎩
              │
              ▼
┌─────────────────────────────┐    SORTIE CRITERE
│    CRITERE DE QUALITE       │ →     QUALITE
│                             │
└─────────────────────────────┘  ⌐ 7

## FIG. 2

Temps

$$\delta_1 \quad \delta_2 \quad \delta_3 \quad \delta_4 \quad \delta_5 \quad \sum_{i=1}^{5} \delta_i$$

FIG.3a

Temps

$$\delta'_1 \quad \delta'_2 \quad \delta'_3 \quad \delta'_4 \quad \delta'_5 \quad \sum_{i=1}^{5} \delta'_i$$

FIG.3b

W

FIG.4a

FIG.4b

FIG.5a

FIG.5b

FIG.5c

distance

FIG.6A

distance

FIG.6B

distance

FIG.6C